# EUROPEAN PATENT SPECIFICATION

(11) **EP 4 380 098 B1**
(45) Date of publication and mention of the grant of the patent: **01.10.2025**
(21) Application number: 22210168.5
(22) Date of filing: 29.11.2022
(51) Int. Cl.: H04L 9/08

(54) **QUANTUM KEY DISTRIBUTION METHOD, COMMUNICATION METHOD AND COMMUNICATION SYSTEM**
QUANTENSCHLÜSSELVERTEILUNGSVERFAHREN, KOMMUNIKATIONSVERFAHREN UND KOMMUNIKATIONSSYSTEM
PROCÉDÉ DE DISTRIBUTION DE CLÉ QUANTIQUE, PROCÉDÉ DE COMMUNICATION ET SYSTÈME DE COMMUNICATION

(43) Date of publication of application: 05.06.2024
(73) Proprietor: Rohde & Schwarz GmbH & Co. KG, 81671 München (DE)
(72) Inventor: Roehrich, Stefan, 81671 München (DE)
(74) Representative: Novagraaf Group

(56) References cited:
- WO-A2-2010/011127
- GHILEN AYMEN ET AL: "Classification of quantum authentication protocols and calculation of their complexity", 2014 15TH INTERNATIONAL CONFERENCE ON SCIENCES AND TECHNIQUES OF AUTOMATIC CONTROL AND COMPUTER ENGINEERING (STA), IEEE, 21 December 2014 (2014-12-21), pages 169 - 173, XP032763526, DOI: 10.1109/STA.2014.7086669

## Description

The invention generally relates to a quantum key distribution (QKD) method for distributing data keys across at least one communication channel of a communication network. The invention further relates to a communication system comprising a communication network with at least one communication channel.

QKD methods correspond a possibility to avert attacks on encrypted communication channels that may become possible with the advent of more powerful quantum computers.

An important performance measure for the efficiency of such QKD methods is the data key rate, i.e. the number of data keys that are distributed per second.

Known QKD methods such as the BB84-QKD protocol use only about 50% of the theoretically attainable data key rate, as the sender and the receiver choose quantum bases at random, wherein only measured quantum states that have been encoded and decoded with (randomly) matching quantum base states are kept, while the remaining measured quantum states are discarded.

WO 2010/011127 A2 discloses a method for quantum network relay. The method comprises the steps of sharing a short secret seed key between nodes and expanding the secret seed key to a longer key. Based on the longer key, qubits are generated by a sender node and transmitted to a receiver node, which measures the qubit with reference to the same longer key.

Thus, the object of the present invention is to provide a QKD method, a communication method, and a communication system with an enhanced attainable quantum key rate.

According to the invention, the problem is solved by a quantum key distribution (QKD) method for distributing data keys across at least two communication channels of a communication network according to claim 1.

The first common secret key may be determined by means of any suitable technique, particularly by means of any suitable technique known in the state of the art. In fact, any suitable pre-quantum cryptography technique, i.e. any suitable "classical" technique may be used.

Preferably, the first common secret key is determined by means of a technique that is at least computationally secure, i.e. a potential attacker is not able to reconstruct the first common secret key based on intercepted communications between the at least two nodes within a predetermined time interval. For example, the technique may be based on a mathematical problem that cannot be solved within the predetermined time interval having a predetermined amount of computational resources.

In fact, it is only required that that the first common secret key cannot be reconstructed by an attacker within the runtime of the QKD method, as reconstructing the first common secret key after the runtime of the QKD method is of no use for the attacker.

For example, if the runtime of the QKD method is in the magnitude of seconds or a few minutes, while an attacker needs several minutes to reconstruct the first common secret key using a quantum computer, the QKD method as a whole is secure nevertheless.

Based on the first common secret key, each node determines the series of quantum base states with a deterministic method, particularly with the same deterministic method.

In other words, the series of quantum base states can be determined unambiguously based on the first common secret key, wherein it is ensured that the at least two nodes determine the same series of quantum base states based on the first common secret key.

Accordingly, all quantum base states of the series of quantum base states can actually be used for subsequent transmission of data between the at least two nodes, as both nodes use the same quantum base states by design, wherein the transmitted data may correspond to a second common secret key, as will be described in more detail below.

Further, a potential attacker does not know the quantum base states used for the transmission of the data at least during the runtime of the QKD method, which is enough to guarantee that the QKD method is secure, as already described above.

As a result the data key rate is significantly enhanced compared to QKD methods known in the state of art.

The series of quantum states corresponds to data to be transmitted between the at least two nodes, namely to a second common secret key, as will be described in more detail below.

Each quantum state may be encoded by means of exactly one element of the series of the quantum base states. Accordingly, a length of the series of quantum base states may be the same as a length of the series of quantum states.

As the at least two nodes have obtained the same series of quantum base states, i.e. the same common secret quantum key, the complete series of quantum states is encoded and decoded by means of the same series of quantum base states on the transmitter side and on the receiver side, respectively.

In other words, the data to be transmitted is encoded by means of the first node using the determined series of quantum base states, transmitted to the second node, and decoded by means of the second node using the same determined series of quantum base states.

Accordingly, apart from potential transmission errors due to disturbances of the communication channel, no data has to be re-transmitted between the at least two nodes, as may be the case in previous QKD methods where only about 50% of the transmitted data or rather quantum states is usable.

According to an aspect of the present invention, the common secret key is determined by means of a key-exchange protocol. In fact, any suitable, computationally secure key-exchange protocol may be used, particularly any computationally secure key-exchange protocol known in the state of the art.

Therein and in the following, the term "key-exchange protocol" is understood to also comprise key-agreement protocols.

Particularly, the key-exchange protocol corresponds to a Diffie-Hellman protocol, an elliptical Diffie-Hellman protocol, a key encapsulation mechanism (KEM), a post-quantum cryptography KEM, or a pre-shared key (PSK) distribution with or without a subsequent key derivation function (KDF). As further examples, a KEM with subsequent KDF or a post-quantum cryptography KEM with subsequent KDF may be used.

Authentication may be provided by the key-exchange mechanism or by using an authenticated channel of the underlying QKD protocol.

In an embodiment of the present invention, the series of quantum base states is determined based on the first common secret key by means of a key derivation function, by means of a deterministic random bit generator (DRBG), and/or by means of a pseudorandom function (PRF). Therein, the KDF, the DRBG and/or the PRF are/is deterministic, such that the series of quantum base states can be derived unambiguously based on the first common secret key.

In fact, the at least two nodes may employ the same KDF, the same DRBG, and/or the same PRF, such that it is ensured that both nodes obtain the same series of quantum states.

A further aspect of the present invention provides that the at least one communication channel used for transmitting the series of quantum states from the first node to the second node is quantum-state-conserving. Thus, after the at least two nodes each have determined the series of quantum base states, the at least one communication channel can be used to transmit data via quantum states, e.g. via quantum bits such as photons having different polarizations. Therein, the quantum states may be encoded and decoded based on the series of quantum base states, such that the data is transmitted securely.

In an embodiment of the present invention, a bit sequence of length n is determined based on the first common secret key, wherein the series of quantum base states is determined based on the determined bit sequence. Particularly, the series of quantum base states may comprise n quantum base states corresponding to the n bits of the bit sequence.

In general, the length n of the bit sequence (and thus the length of the series of quantum base states) may be greater than a length of the first common secret key. In other words, at a given length of the first common secret key, a longer common secret quantum key can be derived. Thus, even very long common secret quantum keys can be generated efficiently.

In a further embodiment of the present invention, the series of quantum states corresponds to predetermined data or to random data. In general, each quantum state may correspond to one or several bits of the predetermined data or of the random data to be transmitted. For example, a first photon polarization may correspond to "0", while a second photon polarization may correspond to "1".

In fact, a second common secret key may be determined based on the predetermined data or based on the random data by means of each of the at least two nodes. Therein, the second common secret key corresponds to a permanent (classical) data key for transmitting data between the first node and the second node.

For example the second common secret key may be identical to the predetermined data or to the random data. In other words, the second common secret key may be predetermined by the first node or randomly determined by the first node.

Alternatively, the second common secret key may be derived from the transmitted data, e.g. by means of a KDF, by means of a DRBG, and/or by means of a PRF. Therein, the KDF, the DRBG and/or the PRF are/is deterministic, such that the second common secret key can be derived unambiguously based on the transmitted data.

In fact, the at least two nodes may employ the same KDF, the same DRBG, and/or the same PRF, such that it is ensured that both nodes obtain the same second common secret key.

According to the invention, the problem further is solved by a communication system comprising a communication network with at least two communication channels according to claim 9.

Regarding the advantages and further properties of the communication system, reference is made to the explanations given above with respect to the QKD method and/or with respect to the communication method, which also hold for the communication system and vice versa.

According to an aspect of the present invention, the at least one communication channel comprises a (electrical) wire-based communication channel, an optical fiber-based communication channel, and/or an over-the-air communication channel.

According to an exemplary embodiment that is not within the scope of the claims, the same communication channel may be used for the key-agreement procedure, i.e. for determining the first common secret key by means of the at least two nodes, and for the subsequent transmission of the series of encoded quantum states.

According to the present invention, different communication channels are used for determining the common secret key and for transmitting the series of encoded quantum states.

According to another aspect of the present invention, the at least one communication channel used for transmitting the series of quantum states from the first node to the second is quantum-state-conserving, such that the series of quantum states is transmitted free of errors.

However, if a different communication channel between the at least two nodes is used for determining the first common secret key, that different communication channel does not necessarily have to be quantum-state-conserving.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a communication system according to the present invention; and
- Figure 2 shows a flow chart of a QKD method and of a communication method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

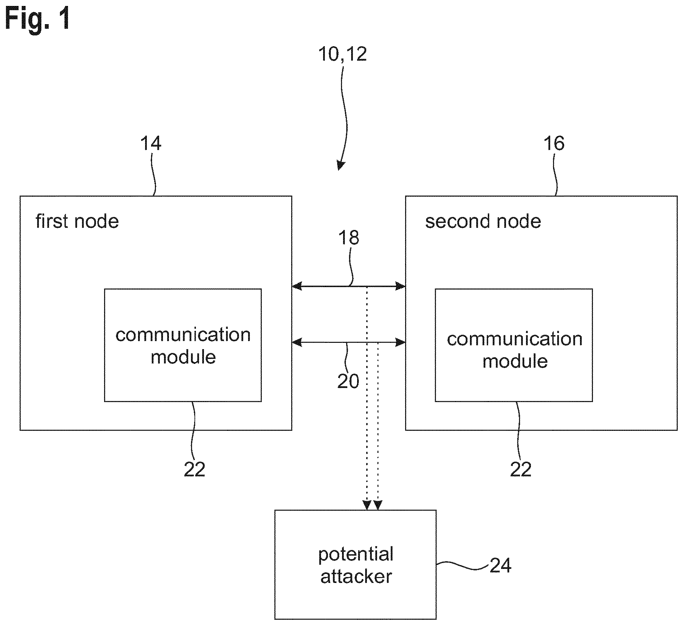

Figure 1 schematically shows a communication system 10 comprising a communication network 12 with a first node 14 and a second node 16.

In general, the nodes 14, 16 may be established as an electronic device, respectively, e.g. as a personal computer, a laptop, a tablet, a smart phone, a radio device, or as any other type of smart device being configured to communicate with other electronic devices.

For example, the nodes 14, 16 may be established as special security devices, such as key management systems or encryption devices.

In the exemplary embodiment of Figure 1, the first node 14 and the second node 16 are connected with each other in a signal-transmitting manner via a first communication channel 18 and via a second communication channel 20.

Therein and in the following, the term "connected in a signal transmitting manner" is understood to denote a cable-based connection, i.e. a wire-based or an optical fiber-based connection, or a wireless connection that is configured to transmit signals between the respective devices or components.

It is to be understood that the communication network 12 may comprise any other arbitrary number of nodes greater than or equal to two, and an arbitrary number of communication channels greater than or equal to one.

Therein, at least one of the communication channels 18, 20 is quantum-state-conserving, such that data can be transmitted on the at least one of the communication channels 18, 20 by transmitting quantum states, particularly quantum bits.

The communication channels 18, 20 may be established as a (electrical) wire-based communication channel, as an optical fiber-based communication channel, or as an over-the-air communication channel, respectively.

In general, the communication network 12 is configured to enable secure, encrypted data transmission between the nodes 14, 16, such that a potential attacker 24 is unable to decode the encoded data transmitted between the nodes 14, 16 based on data intercepted in the communication channels 18, 20.

More precisely, the nodes 14, 16 each comprise a communication module 22, wherein the communication module 22 is configured to encode data to be transmitted via at least one of the communication channels 18, 20, and to decode data received via the at least one of the communication channels 18, 20, as will be described in more detail below.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry. Further, the hardware may comprise an electro-optical converter being configured to convert electrical signals into optical signals, and/or an opto-electrical converter being configured to convert optical signals into electrical signals.

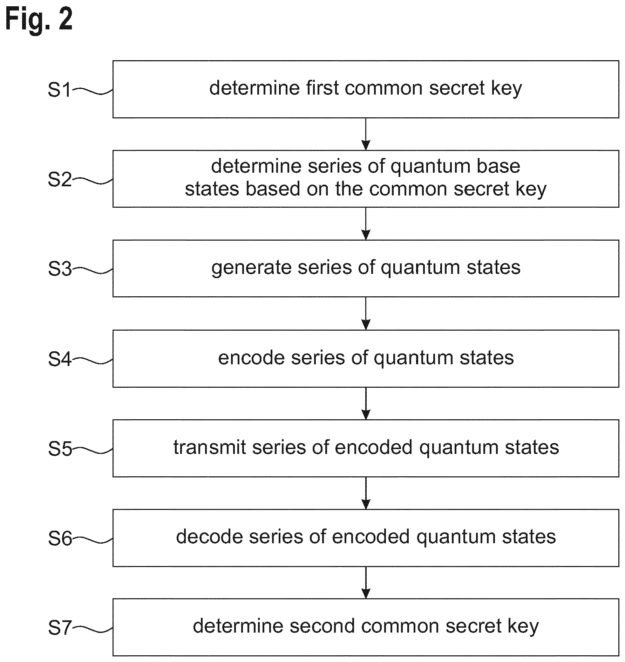

The communication system 10 is configured to perform a quantum key distribution (QKD) method that is described in the following with reference to Figure 2.

A first common secret key is determined by means of the first node 14 and the second node 16, wherein the first common secret key is a preliminary data key for encoding data (step S1).

More precisely, the first common secret key is determined according to a key-exchange protocol, wherein any suitable, at least computationally secure key-exchange protocol may be used. For example, any suitable, at least computationally secure key-exchange protocol known in the state of the art may be used.

Thus, even if the potential attacker 24 intercepts data exchanged between the nodes 14, 16 during the key-exchange procedure, the potential attacker 24 is unable to reconstruct the first common secret key based on the intercepted data within a predetermined time interval (computationally secure protocol) or at all (unconditionally secure protocol).

For example, the key-exchange protocol corresponds to a Diffie-Hellman protocol, an elliptical Diffie-Hellman protocol, a key encapsulation mechanism (KEM), a post-quantum cryptography KEM, or a pre-shared key (PSK) distribution with or without a subsequent key derivation function (KDF). As further examples, a KEM with subsequent KDF or a post-quantum cryptography KEM with subsequent KDF may be used.

For example, the data necessary in order to agree on the first common secret key is exchanged between the first node 14 and the second node 16 via the first communication channel 18.

Accordingly, the first communication channel 18 may be, but does not have to be quantum-state-conserving.

A series of quantum base states is determined by means of the first node 14 and by means of the second node 16 based on the first common secret key, respectively (step S2).

In general, the series of quantum base states corresponds to a common secret quantum key for encoding data as quantum states, particularly as quantum bits.

Therein, the first node 14 and the second node 16 use the same algorithm in order to unambiguously derive the common secret quantum key from the first common secret key.

For example, a bit sequence having length n is generated based on the common secret key.

A key derivation function (KDF), a deterministic random bit generator (DRBG), and/or a pseudorandom function (PRF) may be applied to the first common secret key in order to determine the bit sequence, wherein both nodes 14, 16 apply the same KDF, the same DRBG, and/or the same PRF to the common secret key, such that both nodes 14, 16 obtain the same bit sequence.

In fact, a bit sequence being considerably longer than the original first common secret key may be determined.

More precisely, the bit sequence may have a length n and the first common secret key may have a length m, wherein it holds *n* = *k* · *m* with *k* being a natural number greater than or equal to one, particularly greater than or equal to two, three, etc.

The series of quantum base states may then be determined based on the bit sequence.

For example, if the quantum base has only two different quantum base states (e.g. two different polarizations of a photon), each bit of the bit sequence may correspond to one quantum base state of the series of quantum base states.

More precisely, a bit value of "0" may correspond to a first one of the two different quantum base states (e.g. a first polarization of a photon), and a bit value of "1" may correspond to a second one of the two different quantum base states (e.g. a second polarization of a photon).

Thus, the series of quantum base states having a length n is obtained. In other words, the common secret quantum key of length n is obtained.

However, it is also conceivable that each quantum base state corresponds to two or more consecutive bit values of the bit sequence, such that quantum base states with more than two possibilities can be derived from the bit sequence.

In this case, the series of quantum base states has a length *l* = *n*/*i,* wherein *i* is the number of consecutive bits corresponding to a single quantum base state.

As a result of step S2, both nodes 14, 16 obtain the same series of quantum base states, i.e. the same common secret quantum key, which can afterwards be used for secure data transmission between the nodes 14, 16.

A series of quantum states is generated by means of the first node 14, wherein the series of quantum states corresponds to data to be transmitted from the first node 14 to the second node 16 (step S3).

More precisely, each quantum state of the series of quantum states corresponds to one or more bits of the data to be transmitted.

In fact, the data to be transmitted corresponds to a second common secret data key that is to be used by the nodes 14, 16 for subsequent communications between the nodes 14, 16.

The data to be transmitted may be random data, i.e. the first node 14 may randomly generate the data to be transmitted.

Alternatively, the data to be transmitted may be predetermined.

The series of quantum states is encoded by means of the first node 14, particularly by means of the communication module 22 of the first node 14, using the series of quantum base states, thereby obtaining a series of encoded quantum states (step S4).

In other words, the series of encoded quantum states corresponds to the data to be transmitted from the first node 14 to the second node 16, but encrypted with the common secret quantum key obtained in steps S1 and S2.

Therein, each quantum state of the series of quantum states may be encoded by means of exactly one quantum base state of the series of quantum base states.

Thus, the length of the series of quantum base states is preferably greater than or equal to the length of the series of quantum states.

The series of encoded quantum states is transmitted from the first node 14 to the second node 16 (step S5).

Particularly, the series of encoded quantum states is transmitted from the first node 14 to the second node 16 via the second communication channel 20.

Accordingly, the second communication channel 20 is quantum-state-conserving, such that the series of encoded quantum states is correctly transmitted from the first node 14 to the second node 16.

Thus, in the particular example describe above, the first communication channel 18 is used for the key-agreement procedure, i.e. for determining the first common secret key, while the second communication channel 20 is used for transmitting the encoded data from the first node 14 to the second node 16.

However, it is to be understood that the key-agreement procedure and the data transmission may alternatively use a single communication channel.

The series of encoded quantum states is decoded by means of the second node 16, particularly by means of the communication module 22 of the second node 16, based on the series of quantum base states, thereby recovering the series of quantum states (step S6).

In other words, the data transmitted from the first node 14 to the second node 16 is recovered by decoding the series of encoded quantum states.

The potential attacker 24 is unable to decode the series of encoded quantum base states even if data is intercepted from the second communication channel 20, as the potential attacker 24 has no access to the series of quantum base states used for encoding the data, as described above.

A second common secret key is determined based on the predetermined data or based on the random data by means of each of the at least two nodes 14, 16 (step S7).

In general, the second common secret key is a classical data key that is to be used by the nodes 15, 16 for subsequent communication on a classical channel.

For example the second common secret key may be identical to the predetermined data or to the random data. Thus, no further steps are required after the series of encoded quantum states has been decoded.

However, the second common secret key may be derived from the transmitted data by means of suitable additional steps.

For example, an error correction may be applied to the decoded series of quantum states by means of the second node 16 in order to correct errors due to disturbances of the second communication channel 20 and/or in order to detect a potential attacker that has intercepted the series of encoded quantum states at least partially.

Additionally or alternatively, other steps that are commonly performed in QKD protocols (such as BB84-QKD) in order to determine the second common secret key may be performed by means of the nodes 14, 16, e.g. parameter estimation and/or privacy amplification.

Additionally or alternatively, the second common secret key may be derived from the transmitted data. by means of a KDF, by means of a DRBG, and/or by means of a PRF. Therein, the KDF, the DRBG and/or the PRF are/is deterministic, such that the second common secret key can be derived unambiguously based on the transmitted data.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A quantum key distribution, QKD, method for distributing data keys across at least two communication channels (18, 20) of a communication network (12), wherein the at least two communication channels (18, 20) connect at least two nodes (14, 16) of the communication network (12), wherein the at least two nodes (14, 16) comprise a first node (14) and a second node (16), wherein the QKD method comprises the following steps:
- determining, by means of the at least two nodes (14, 16), a first common secret key, wherein the first common secret key is a preliminary data key;
- determining, by means of each of the at least two nodes (14, 16), a series of quantum base states based on the first common secret key, wherein the series of quantum base states corresponds to a common secret quantum key;
- generating, by means of the first node (14), a series of quantum states;
- encoding, by means of the first node (14), the series of quantum states based on the series of quantum base states, thereby obtaining a series of encoded quantum states;
- transmitting the series of encoded quantum states from the first node (14) to the second node (16); and
- decoding, by means of the second node (16), the series of encoded quantum states based on the series of quantum base states, thereby recovering the series of quantum states;
wherein different communication channels (18, 20) are used for determining the common secret key and for transmitting the series of encoded quantum states.

2. The QKD method of claim 1, wherein the first common secret key is determined by means of a key-exchange protocol.

3. The QKD method of claim 2, wherein the key-exchange protocol corresponds to a Diffie-Hellman protocol, an elliptical Diffie-Hellman protocol, a key encapsulation mechanism, KEM, a post-quantum cryptography KEM, or a pre-shared key, PSK, distribution with a subsequent key derivation function, KDF.

4. The QKD method according to any one of the preceding claims, wherein the series of quantum base states is determined based on the first common secret key by means of a key derivation function, by means of a deterministic random bit generator, DRBG, and/or by means of a pseudorandom function, PRF.

5. The QKD method according to any one of the preceding claims, wherein the at least two communication channels (18, 20) used for transmitting the series of quantum states from the first node (14) to the second node (16) are quantum-state-conserving.

6. The QKD method according to any one of the preceding claims, wherein a bit sequence of length n is determined based on the first common secret key, and wherein the series of quantum base states is determined based on the determined bit sequence.

7. The QKD method according to any one of the preceding claims, wherein the series of quantum states corresponds to predetermined data or to random data.

8. The QKD method according to claim 7, wherein a second common secret key is determined based on the predetermined data or based on the random data by means of each of the at least two nodes (14, 16).

9. A communication system comprising a communication network (12) with at least two communication channels (18, 20), wherein the at least two communication channels (18, 20) connect at least two nodes (14, 16) of the communication network (12), and wherein the communication system (10) is configured to perform the QKD method according to any one of claims 1 to 8.

10. The communication system of claim 9, wherein the at least two communication channels (18, 20) comprise an optical fiber-based communication channel, and/or an over-the-air communication channel.

11. The communication system of claim 9 or 10, wherein the at least two communication channels (18, 20) used for transmitting the series of quantum states from the first node (14) to the second node (16) are quantum-state-conserving.

## Patentansprüche

1. Quantenschlüsselverteilungsverfahren, QKD-Verfahren, zum Verteilen von Datenschlüsseln über mindestens zwei Kommunikationskanäle (18, 20) eines Kommunikationsnetzwerks (12), wobei die mindestens zwei Kommunikationskanäle (18, 20) mindestens zwei Knoten (14, 16) des Kommunikationsnetzwerks (12) verbinden, wobei die mindestens zwei Knoten (14, 16) einen ersten Knoten (14) und einen zweiten Knoten (16) umfassen, wobei das QKD-Verfahren die folgenden Schritte umfasst:
- Bestimmen, mittels der mindestens zwei Knoten (14, 16), eines ersten gemeinsamen geheimen Schlüssels, wobei der erste gemeinsame geheime Schlüssel ein vorläufiger Datenschlüssel ist;
- Bestimmen, mittels jedes der mindestens zwei Knoten (14, 16), einer Reihe von Quantenbasiszuständen basierend auf dem ersten gemeinsamen geheimen Schlüssel, wobei die Reihe von Quantenbasiszuständen einem gemeinsamen geheimen Quantenschlüssel entspricht;
- Erzeugen, mittels des ersten Knotens (14), einer Reihe von Quantenzuständen;
- Codieren, mittels des ersten Knotens (14), der Reihe von Quantenzuständen basierend auf der Reihe von Quantenbasiszuständen, wodurch eine Reihe von codierten Quantenzuständen erhalten wird;
- Übertragen der Reihe von codierten Quantenzuständen von dem ersten Knoten (14) zu dem zweiten Knoten (16); und
- Decodieren, mittels des zweiten Knotens (16), der Reihe von codierten Quantenzuständen basierend auf der Reihe von Quantenbasiszuständen, wodurch die Reihe von Quantenzuständen wiederhergestellt wird;
wobei unterschiedliche Kommunikationskanäle (18, 20) zum Bestimmen des gemeinsamen geheimen Schlüssels und zum Übertragen der Reihe von codierten Quantenzuständen verwendet werden.

2. QKD-Verfahren nach Anspruch 1, wobei der erste gemeinsame geheime Schlüssel mittels eines Schlüsselaustauschprotokolls bestimmt wird.

3. QKD-Verfahren nach Anspruch 2, wobei das Schlüsselaustauschprotokoll einem Diffie-Hellman-Protokoll, einem elliptischen Diffie-Hellman-Protokoll, einem Schlüsselkapselungsmechanismus, KEM, einem Post-Quantenkryptographie-KEM, oder einer zuvor geteilten Schlüssel-Verteilung, PSK-Verteilung, mit einer nachfolgenden Schlüsselableitungsfunktion, KDF, entspricht.

4. QKD-Verfahren nach einem der vorstehenden Ansprüche, wobei die Reihe von Quantenbasiszuständen basierend auf dem ersten gemeinsamen geheimen Schlüssel mittels einer Schlüsselableitungsfunktion, mittels eines deterministischen Zufallsbitgenerators, DRBG, und/oder mittels einer Pseudozufallsfunktion, PRF, bestimmt wird.

5. QKD-Verfahren nach einem der vorstehenden Ansprüche, wobei die mindestens zwei Kommunikationskanäle (18, 20), die zum Übertragen der Reihe von Quantenzuständen von dem ersten Knoten (14) zu dem zweiten Knoten (16) verwendet werden, quantenzustandserhaltend sind.

6. QKD-Verfahren nach einem der vorstehenden Ansprüche, wobei eine Bitfolge der Länge n basierend auf dem ersten gemeinsamen geheimen Schlüssel bestimmt wird und wobei die Reihe von Quantenbasiszuständen basierend auf der bestimmten Bitfolge bestimmt wird.

7. QKD-Verfahren nach einem der vorstehenden Ansprüche, wobei die Reihe von Quantenzuständen zuvor bestimmten Daten oder Zufallsdaten entspricht.

8. QKD-Verfahren nach Anspruch 7, wobei ein zweiter gemeinsamer geheimer Schlüssel basierend auf den zuvor bestimmten Daten oder basierend auf den Zufallsdaten mittels jedes der mindestens zwei Knoten (14, 16) bestimmt wird.

9. Kommunikationssystem, umfassend ein Kommunikationsnetzwerk (12) mit mindestens zwei Kommunikationskanälen (18, 20), wobei die mindestens zwei Kommunikationskanäle (18, 20) mindestens zwei Knoten (14, 16) des Kommunikationsnetzwerks (12) verbinden, und wobei das Kommunikationssystem (10) konfiguriert ist, um das QKD-Verfahren nach einem der Ansprüche 1 bis 8 durchzuführen.

10. Kommunikationssystem nach Anspruch 9, wobei die mindestens zwei Kommunikationskanäle (18, 20) einen auf Glasfaser basierenden Kommunikationskanal und/oder einen drahtlosen Kommunikationskanal umfassen.

11. Kommunikationssystem nach Anspruch 9 oder 10, wobei die mindestens zwei Kommunikationskanäle (18, 20), die zum Übertragen der Reihe von Quantenzuständen von dem ersten Knoten (14) zu dem zweiten Knoten (16) verwendet werden, quantenzustandserhaltend sind.

## Revendications

1. Procédé de distribution de clés quantiques, QKD, permettant de distribuer des clés de données sur au moins deux canaux de communication (18, 20) d'un réseau de communication (12), dans lequel les au moins deux canaux de communication (18, 20) relient au moins deux nœuds (14, 16) du réseau de communication (12), dans lequel les au moins deux nœuds (14, 16) comprennent un premier nœud (14) et un second nœud (16), dans lequel le procédé QKD comprend les étapes suivantes :
- déterminer, au moyen des au moins deux nœuds (14, 16), une première clé secrète commune, dans lequel la première clé secrète commune est une clé de données préliminaire ;
- déterminer, au moyen de chacun des au moins deux nœuds (14, 16), une série d'états de base quantiques en fonction de la première clé secrète commune, dans lequel la série d'états de base quantiques correspond à une clé quantique secrète commune ;
- générer, au moyen du premier nœud (14), une série d'états quantiques ;
- coder, au moyen du premier nœud (14), la série d'états quantiques en fonction de la série d'états quantiques de base, ce qui permet d'obtenir une série d'états quantiques codés ;
- transmettre la série d'états quantiques codés du premier nœud (14) au second nœud (16) ; et
- décoder, au moyen du second nœud (16), la série d'états quantiques codés en fonction de la série d'états quantiques de base, ce qui permet de récupérer la série d'états quantiques ;
dans lequel différents canaux de communication (18, 20) sont utilisés pour déterminer la clé secrète commune et pour transmettre la série d'états quantiques codés.

2. Procédé QKD selon la revendication 1, dans lequel la première clé secrète commune est déterminée au moyen d'un protocole d'échange de clés.

3. Procédé QKD selon la revendication 2, dans lequel le protocole d'échange de clés correspond à un protocole Diffie-Hellman, un protocole Diffie-Hellman elliptique, un mécanisme d'encapsulation de clés, KEM, un KEM de cryptographie post-quantique, ou une distribution de clés pré-partagées, PSK, avec une fonction de dérivation de clés, KDF ultérieure.

4. Procédé QKD selon l'une quelconque des revendications précédentes, dans lequel la série d'états de base quantiques est déterminée en fonction de la première clé secrète commune au moyen d'une fonction de dérivation de clé, au moyen d'un générateur de bits aléatoires déterministe, DRBG, et/ou au moyen d'une fonction pseudo-aléatoire, PRF.

5. Procédé QKD selon l'une quelconque des revendications précédentes, dans lequel les au moins deux canaux de communication (18, 20) utilisés pour transmettre la série d'états quantiques du premier nœud (14) au second nœud (16) sont conservateurs d'état quantique.

6. Procédé QKD selon l'une quelconque des revendications précédentes, dans lequel une séquence de bits de longueur n est déterminée en fonction de la première clé secrète commune, et dans lequel la série d'états de base quantiques est déterminée en fonction de la séquence de bits déterminée.

7. Procédé QKD selon l'une quelconque des revendications précédentes, dans lequel la série d'états quantiques correspond à des données prédéterminées ou à des données aléatoires.

8. Procédé QKD selon la revendication 7, dans lequel une seconde clé secrète commune est déterminée en fonction des données prédéterminées ou en fonction des données aléatoires au moyen de chacun des au moins deux nœuds (14, 16).

9. Système de communication comprenant un réseau de communication (12) avec au moins deux canaux de communication (18, 20), dans lequel les au moins deux canaux de communication (18, 20) relient au moins deux nœuds (14, 16) du réseau de communication (12), et dans lequel le système de communication (10) est configuré pour exécuter le procédé QKD selon l'une quelconque des revendications 1 à 8.

10. Système de communication selon la revendication 9, dans lequel les au moins deux canaux de communication (18, 20) comprennent
un canal de communication à base de fibre optique, et/ou un canal de communication par voie hertzienne.

11. Système de communication selon la revendication 9 ou 10, dans lequel les au moins deux canaux de communication (18, 20) utilisés pour transmettre la série d'états quantiques du premier nœud (14) au second nœud (16) sont conservateurs d'état quantique.
